# EUROPÄISCHE PATENTSCHRIFT

(11) **EP 1 145 837 B1**
(45) Veröffentlichungstag und Bekanntmachung des Hinweises auf die Patenterteilung: **01.06.2005**
(21) Anmeldenummer: 01106192.6
(22) Anmeldetag: 14.03.2001
(51) Int. Cl.: B30B 5/02, F16B 11/00, C09J 5/06, F24H 3/04

(54) **Vorrichtung zum Verbinden von wenigstens zwei Bauteilen**
Apparatus for joining of at least two construction elements
Dispositif pour l'assemblage d'au moins deux éléments de construction

(30) Priorität: 13.04.2000 DE 10018529
(43) Veröffentlichungstag der Anmeldung: 17.10.2001
(73) Patentinhaber: Schmidt, Dieter, 93055 Regensburg (DE)
(72) Erfinder: Schmidt, Dieter, 930955 Regensburg (DE)
(74) Vertreter: Graf, Helmut, Dipl.-Ing.

(56) Entgegenhaltungen:
- EP-A1- 0 364 191
- EP-A2- 0 723 853
- DE-A1- 19 941 996
- US-A- 6 026 881

## Beschreibung

Die Erfindung bezieht sich auf eine Vorrichtung gemäß dem Oberbegriff des Patentanspruchs 1.

Es ist bekannt (WO 87/07557), Bauteile oder Komponenten mittels eines auf Hitze reagierenden Klebers unter Verwendung eines heißen, dampfförmigen Strömungsmediums und anschließend von kühlender Luft miteinander zu verkleben. Das erhitzte Strömungsmedium und die zur Kühlung verwendete Luft treten dabei aus Austrittsöffnungen aus, die an einem Kanal vorgesehen sind, der sich entlang eines Klebebereichs bzw. einer Klebelinie erstrecken, an dem bzw. an der die Bauteile miteinander verbunden werden sollen. Bei dieser bekannten Vorrichtung geht es speziell darum, zum Herstellen von Kissen usw. eine Stofflaminierung auf einem Schaumstoffkem zu befestigen.

Bekannt ist auch(EP 0 723 853), Bauteile von Automobilen unter Anwendung von heißer Luft (in einer Heizphase) und anschließend kalter Luft (in einer Kühlphase) und unter Verwendung eines bei Erwärmung aushärtenden Klebers miteinander zu verbinden, wobei in die Bauteile aufnehmenden Werkzeugteilen einer entsprechenden Vorrichtung entlang der Verbindungs- oder Klebelinie, an den die Bauteile miteinander verbunden werden sollen, nutenförmige Vertiefungen vorgesehen sind, in denen jeweils ein Verteilerrohr mit einer Vielzahl von Austrittsöffnungen für die heiße und kalte Luft angeordnet ist. Dieses Verteilerrohr ist dann über ein Versorgungsrohr mit einer zentralen Heiz- und Kühleinrichtung zur Erzeugung heißer und kalter Luft verbunden.

Nachteilig bei dieser bekannten Vorrichtung ist unter anderem, daß das Verteilerrohr, das Versorgungsrohr sowie die zugehörigen Verbindungen lange Strömungswege bedingen und eine hohe thermische Masse mit schlechter thermischen Isolierung darstellen, d.h. einerseits beim Zuführen von heißer Luft erhebliche Wäremeverluste auftreten und daher eine relativ hohe Heizleistung erforderlich ist, um auch an Bereichen, die weit von dem zentralen Heiz- und Kühlaggregat entfernt sind, noch die erforderliche Menge an heißer Luft mit der erforderlichen Temperatur zu erhalten. Nachteilig ist weiterhin auch, daß durch die hohe thermische Masse bzw. Wärmekapazität ein schnelles Umschalten zwischen der Heizphase und der Kühlphase nicht, allenfalls aber nur dann möglich ist, wenn dem System von der zentralen Heiz- und Kühleinrichtung tatsächlich gekühlte Luft zugeführt wird, was ebenfalls einen erheblichen Energieverbrauch bedeutet.

Aufgabe der Erfindung ist es, eine Vorrichtung der gattungsmäßigen Art dahingehend weiterzubilden, daß sie unter Vermeidung der vorgenannten Nachteile des Standes der Technik ein zumindest schnelles Erhitzen des jeweiligen Klebebereichs (Klebe- oder Verbindungslinie) bei deutlich reduziertem Energieverbrauch ermöglicht.

Zur Lösung dieser Aufgabe ist eine Vorrichtung entsprechend dem Patentanspruch 1 ausgebildet.

Bei der erfindungsgemäßen Vorrichtung ist der sich entlang der Klebe- oder Verbindungslinie erstreckende Kanal für das gasförmige Strömungsmedium in eine Vielzahl von Einzelkanälen aufgeteilt, denen jeweils ein eigener Erhitzer für das gasförmige Strömungsmedium zugeordnet ist. Bei der Erfindung sind die Teilkanäle vorzugsweise voneinander getrennt. Das Erhitzen des gasförmigen Strömungsmediums erfolgt somit bei der Erfindung unmittelbar dort, wo die Klebeverbindung zwischen den Bauteilen erreicht werden soll, d.h. das heiße Strömungsmedium benötigt wird. Allein schon hierdurch ergibt sich wegen der kurzen Strömungswege für das erhitzte Strömungsmedium eine erhebliche Energieeinsparung gegenüber dem Stand der Technik.

Eine weitere Besonderheit der Erfindung besteht darin, daß jeder Kanalabschnitt zumindest an seiner der Werkzeugfläche benachbarten Seite einen membran- oder balgartigen Wandabschnitt aufweist, der beim sich Beaufschlagen des Kanalabschnittes mit dem Strömungsmedium bzw. mit dem Druck dieses Strömungsmediums gegen das Bauteil anlegt, so daß schon allein durch Berührung eine Wärmeübertragung an das Bauteil und damit an den Verbindungs- oder Klebebereich möglich ist. Bevorzugt sind aber in diesem Wandabschnitt dann auch Austrittsöffnungen für das gasförmige Medium vorgesehen, welches an diesen Öffnungen dann unmittelbar an dem jeweiligen Bauteil austritt.

Bei einer bevorzugten Ausführungsform der Erfindung sind die Teilkanäle jeweils von einem langgestreckten Balg oder Schlauchstück gebildet, oder aber von einem rinnenartigen beidendig geschlossenen und zur Werkzeugfläche durch eine Membrane begrenzten Formteil, wobei das Schlauchstück, das Formteil und die Membrane aus einem flexiblen, hitzebeständigen und wärmeisolierenden Material, d.h. z.B. aus einem entsprechenden Kunststoff bestehen. Diese Ausbildung hat u.a. den Vorteil, daß durch die Verwendung des wärmeisolierenden Materials Wärmeverluste noch weiter reduziert werden, daß das Material eine äußerst geringe Wärmespeicherkapazität aufweist, und daß das jeweilige Schlauchelement bzw. die jeweiligen Membrane so ausgebildet werden können, daß sie bei geöffneter Vorrichtung bzw. bei geöffneten Werkzeugteilen in einer Vertiefung dieser Werkzeugteile geschützt untergebracht sind.

Weiterbildungen der Erfindung sind Gegenstand der Unteransprüche. Die Erfindung wird im folgenden anhand der Figuren an Ausführungsbeispielen näher erläutert. Es zeigen:
- Fig. 1: in sehr vereinfachter schematischer Darstellung und im Teilschnitt das Oberteil und das Unterteil eines Klebewerkzeugs zum Verbinden zweier Bauteile mit einem unter Einwirkung von Hitze aushärtenden Klebstoff;
- Fig. 2: in sehr vereinfachter Darstellung eine Draufsicht auf das Oberteil bzw. Unterteil des Klebewerkzeugs der Figur 1;

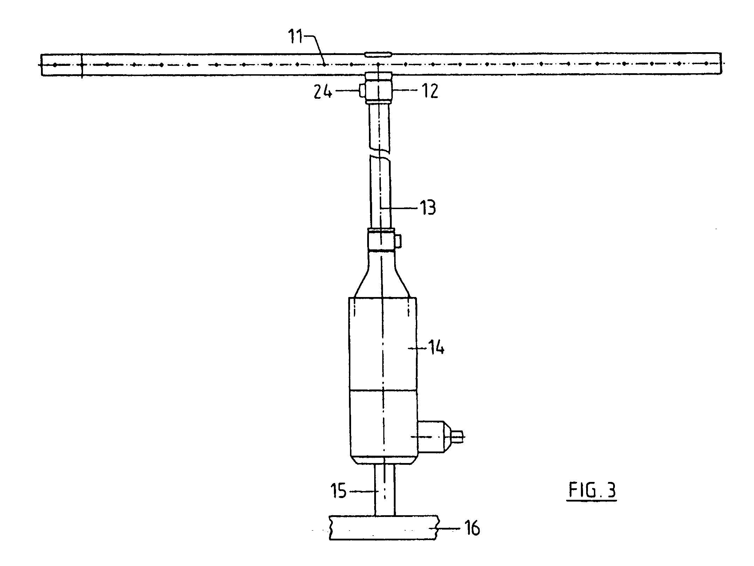

- Fig. 3: in Einzeldarstellung ein Heiz- oder Kühlmodul des Klebewerkzeugs der Figuren 1 und 2;
- Fig. 4: ein elektrischer Lufterhitzer zur Verwendung bei dem Heiz- und Kühlmodul der Figur 3;
- Fig. 5: einen Schnitt entsprechend der Linie A - A der Figur 4;
- Fig. 6: eine Darstellung wie Figur 1 bei einer weiteren, möglichen Ausführungsform.

In den Figuren sind 1 und 2 zwei Bauteile, beispielsweise zwei Bauteile einer Fahrzeug- oder Pkw- Karosserie, und dabei speziell beispielsweise das Bauteil 1 ein Außenhautbauteil einer Fahrzeugkarosserie und das Bauteil 2 ein Verstärkungsteil. Die beiden Bauteile 1 und 2 sind miteinander zu verbinden. Hierfür werden diese Bauteile 1 und 2 in ein Werkzeug eingelegt, von dem in den Figuren lediglich das Oberteil 3 und das Unterteil 4 dargestellt ist. Beide Teile 3 und 4 sind Bestandteil einer entsprechenden Vorrichtung, die unter anderem derart ausgebildet ist, daß zum Öffnen des Werkzeugs die Werkzeugteile 3 und 4 voneinander wegbewegt und zum Schließen des Werkzeugs die Werkzeugteile 3 und 4 aufeinander zubewegt werden können, und zwar derart, daß diese Werkzeugteile 3 und 4 bzw. deren Werkzeugflächen 3' und 4' bei geschlossenem Werkzeug einen durch Anschläge vorgegebenen Abstand voneinander aufweisen. Die Werkzeugteile 3 und 4 sind so ausgebildet, daß die Bauteile 1 und 2 auf den Werkzeugflächen 3' und 4' jeweils lagegenau angeordnet und gehalten sind.

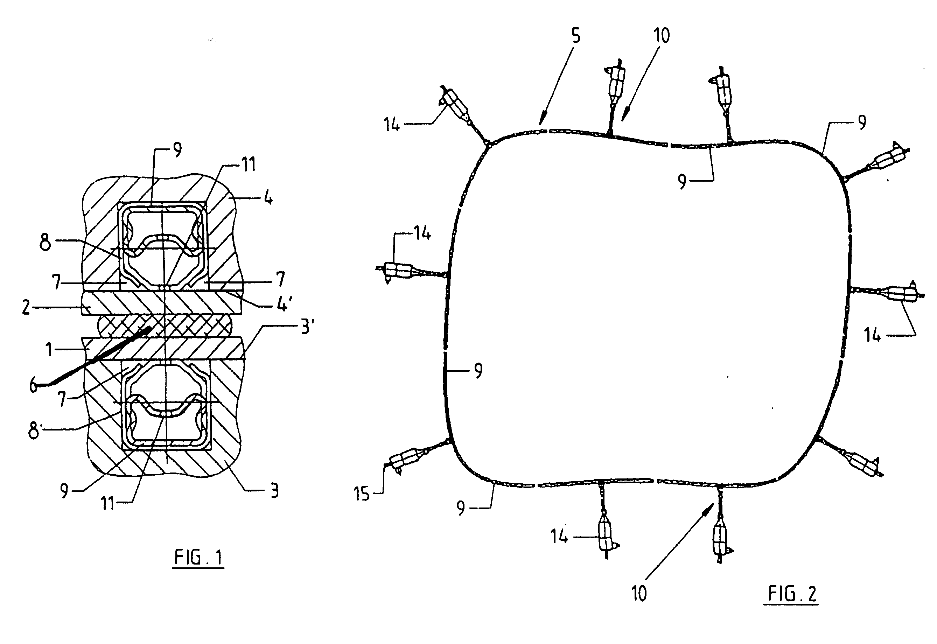

Zum Verbinden der Bauteile 1 und 2 entlang einer Verbindungslinie 5, die entsprechend der Figur 2 beispielsweise eine geschlossene Linie ist, wird das Bauteil 1 in das Werkzeugteil 3 und das Bauteil 2 in das Werkzeugteil 4 eingelegt. Vor dem Schließen des Werkzeugs erfolgt entlang der Verbindungslinie 5 ein wulstförmiger Auftrag aus einem Klebstoff 6. Der Klebstoff 6 ist so ausgebildet, daß er unter Einwirkung von Hitze abbindet bzw. aushärtet. Bei diesem Klebstoff 6 handelt es sich beispielsweise um einen Zweikomponentenkleber.

Nach dem Aufbringen des Klebstoffes 6 z. B. auf das im Werkzeugteil 3 angeordnete Bauteil 1 wird das Werkzeug geschlossen, so daß sich der Klebstoff 6 entlang der Verbindungslinie 5 zwischen den Bauteilen 1 und 2 befindet. Im Anschluß daran erfolgt ein Erhitzen der Bauteile 1 und 2 und damit auch des Klebstoffes 6 entlang der Verbindungslinie 5 zum Aushärten des Klebstoffes 6 und ein anschließendes Kühlen. Das Erhitzen und Kühlen erfolgt hierbei mit heißer bzw. kalter Luft.

Wie die Figur 1 zeigt, ist in jedes Werkzeugteil 3 bzw. 4 eine nutenförmige Ausnehmung 7 eingebracht, die entlang der Verbindungs- oder Klebelinie 5 verläuft und zur jeweiligen Werkzeugteilfläche 3' bzw. 4' hin offen ist.

In der Ausnehmung 7 sind mit Hilfe von C-förmigen Metallklammern 8 beidendig geschlossene balgartige Schlauchstücke 9 gehalten. Jedes Schlauchstück 9, welches aus einem thermisch belastbaren und flexiblen Material, beispielsweise aus einem einlagigen oder mehrlagigen Material, z.B. aus Teflon oder aus einem anderen geeigneten Kunststoffmaterial bestehen, ist Bestandteil eines Heiz- und Kühlmoduls 10.

Jedes Kühlmodul 10 besteht, wie erwähnt, aus dem beidendigen geschlossenen Schlauchstück 9, welches einen Kanal 9' bildet und an seiner der Ebene der jeweiligen Werkzeugfläche 3' bzw. 4' zugewandten Seite mit einer Vielzahl von Öffnungen 11 versehen ist und über ein Kupplungsstück 12 und ein Verbindungsrohr 13 mit dem Luftausgang eines elektrisch betriebenen Lufterhitzers 14 verbunden, dessen Eingang über eine Rohrabzweigung 15 mit einer Versorgungsleitung 16 für Druckluft verbunden ist.

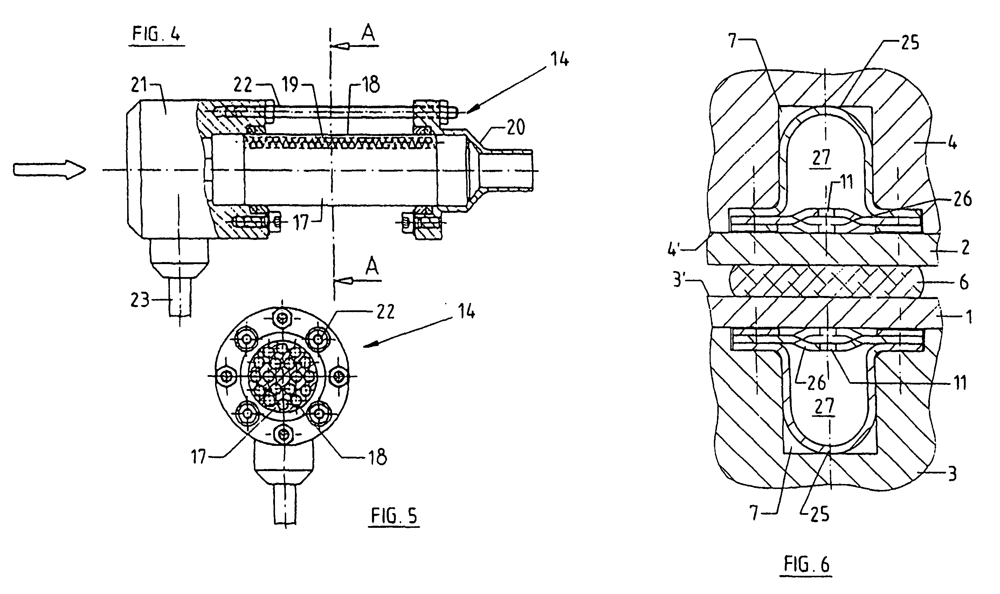

Der Lufterhitzer 14 ist im Detail in den Figuren 4 und 5 gezeigt. Er besteht im wesentlichen aus einer aus einem keramischen Material hergestellten, an der Außenfläche kreiszylinderförmig ausgebildeten Heizpatrone 17, die parallel zu ihrer Längsachse L eine Vielzahl von Kanälen 18 aufweist, die an beiden Enden der Heizpatrone 17 offen sind. In jedem Kanal 18 ist freiliegend eine wendelförmige Heizspirale 19 angeordnet. Die Enden der Heizspiralen 19 sind in geeigneter Weise geschaltet, und zwar beispielsweise derart, daß die Heizspiralen 19 parallel zueinander liegen. Grundsätzlich ist es auch möglich, die Heizspiralen 19 oder jeweils Gruppen dieser Heizspiralen 19 in Serie zu schalten. Auf den beiden Enden der Heizpatrone 17 sind unter Verwendung von Dichtungen Anschlußstücke befestigt, und zwar das Anschlußstück 20, welches den Auslaß des Erhitzers 14 bildet, und der Anschluß 21, der den mit der Rohrabzweigung 15 verbundenen Einlaß des Erhitzers 14 bildet. Über mehrere äußere Spannbolzen 22 sind die Anschlüsse 20 und 21 mit der Heizpatrone 17 verspannt. Am Anschluß 21 ist auch der nach außen führende Elektroanschluß 23 vorgesehen.

Im Verwendungsfall werden die Kanäle 18 von der Luft durchströmt. Da die Heizspiralen 19 in diesen Kanälen 18 freiliegend angeordnet sind, ergibt sich ein hoher Wirkungsgrad für den Erhitzer 14. Eine weitere Besonderheit besteht darin, daß jeder Erhitzer 14 jedes Heiz- und Kühlmoduls 10 über eine kurze Verbindungsleitung 13 unmittelbar an dem zugehörigen Schlauchstück 9 vorgesehen ist.

Wie die Figur 1 zeigt, sind die Schlauchstücke 9 vorzugsweise so ausgebildet, daß sie im drucklosen Zustand "zusammengefaltet" und mit Abstand von der zugehörigen Werkzeugfläche 3' bzw. 4' in der zugehörigen nutenförmigen Ausnehmung 7 aufgenommen sind, was unter anderem auch eine Verletzung der Schlauchstücke 9 bei geöffnetem Werkzeugteil 3 und 4 verhindert.

Die Metallklammern 8 sind beispielsweise aus Federbandstahl durch Biegen derart hergestellt, daß sie sich mit ihren Außenflächen durch Klemmsitz in der jeweiligen nutenartigen Ausnehmung 7 halten, wobei die freien Enden der C- oder U-förmigen Klammern 8 sich in der Nähe der jeweiligen Werkzeugfläche 3' bzw. 4', aber noch innerhalb der jeweiligen Ausnehmung 7 befinden und voneinander beabstandet sind, so daß im aufgeblähten bzw. aufgefalteten Zustand des Schlauchstückes 9 dieses mit seinen Öffnungen 11 zwischen den freien Enden der Metallklammern 8 angeordnet ist.

Bei Beaufschlagung des jeweiligen Schlauchstückes 9 mit Druckluft wird dieses Schlauchstück dann balgartig aufgebläht bzw. aufgefaltet, so daß es mit seinem die Öffnungen 11 aufweisenden Bereich in der Ebene der jeweiligen Werkzeugfläche 3' bzw. 4' liegt, und zwar in Berührungskontakt mit dem betreffenden Bauteil 1 bzw. 2.

Wie die Figur 2 zeigt, ist es mit den Schlauchstücken 9 auch möglich, für die Verbindungslinie 5 beliebige Formgebungen zu erreichen, insbesondere auch einen gekrümmten Verlauf.

Im Verwendungsfall werden nach dem Einlegen der Bauteile 1 und 2 in das Werkzeug und nach dem Aufbringen des Klebstoffes 6 sowie nach dem Schließen des Werkzeugs bzw. der Werkzeugteile 3 und 4 über die Versorgungsleitungen 16, die für die Werkzeugteile 3 und 4 individuell vorgesehen sind, die einzelnen Heiz- und Kühlmodule mit der Druckluft beaufschlagt. Gleichzeitig sind die Erhitzer 14 aktiviert, so daß über diese Erhitzer die zunächst drucklosen Schlauchstücke 9 balgartig und im wesentlichen ohne elastische Verformung ihrer Wandung mit den Öffnungen 11 gegen die Bauteile 1 und 2 zur Anlage gebracht werden, so daß dann durch die heiße, aus den Öffnungen 11 austretende Luft die Bauteile 1 und 2 für das Aushärten des Klebstoffes 6 erhitzt werden. Nach einer vorgegebenen Behandlungsdauer werden die Erhitzer 14 abgeschaltet, und zwar bei weiterhin eingeschalteter Druckluft, so daß dann im Anschluß daran durch die aus den Öffnungen 11 austretende, nicht mehr erhitzte Druckluft ein Abkühlen der Bauteile 1 und 2 und damit des Klebstoffes 6 und eine dauerhafte Verbindung zwischen den Bauteilen 1 und 2 hergestellt ist.

Wie die Figur 2 zeigt, schließen entlang der Verbindungs- bzw. Klebelinie 5 eine Vielzahl von Schlauchstücken 9 aneinander an, die jeweils zu einem eigenen Heiz- und Kühlmodul 10 mit unmittelbar an dem jeweiligen Schlauchstück 9 angeordneten Erhitzer 14 gehören. Diese Anordnung ist sowohl am Werkzeugteil 3 (Unterteil), als auch am Werkzeugteil 4 (Oberteil) so vorgesehen. Durch die Aufteilung der Klebe- oder Verbindungslinie 5 in eine Vielzahl von aufeinander folgenden Schlauchstücken 9, durch die Verwendung jeweils eines eigenen, unmittelbar am zugehörigen Schlauchstück 9 vorgesehenen Erhitzers sowie durch die Ausbildung der Erhitzer 14 in der vorbeschriebenen Weise ergibt sich für die Heiz- und Kühlmodule 10 ein hoher Wirkungsgrad, d.h. das Aushärten des jeweiligen Klebstoffes 6 wird mit einem Minimum an Heizenergie erreicht.

Ein weiterer besonderer Vorteil besteht darin, daß durch die balgartige Ausbildung der Schlauchstücke 9 die für das Aushärten benötigte heiße Luft, aber auch die Kühlluft, unmittelbar an den Bauteilen 1 und 2 austritt, hiermit die verwendete Luft also optimal genutzt wird, was zu einer Reduzierung des Luftverbrauchs sowie gleichzeitig auch zu einer erheblichen Reduzierung der benötigten Heizenergie führt. Insgesamt lassen sich durch die erfindungsgemäße Ausbildung bis zu 60 % der Heizenergie gegenüber bekannten Vorrichtungen einsparen.

Durch die erfindungsgemäße Ausbildung ist weiterhin eine sehr genaue Regelung der auf die Bauteile 1 und 2 einwirkenden Temperatur möglich, und zwar beispielsweise unter Verwendung eines in dem jeweiligen Kupplungsstück 12 angeordneten Temperatursensors 24. Die Temperaturregelung ist dann für jedes Heiz- und Kühlmodul 10 unabhängig möglich. Grundsätzlich besteht auch die Möglichkeit, an den einzelnen Heiz- und Kühlmodulen 10 unterschiedliche Temperaturen einzustellen und/oder durch individuell steuerbare, beispielsweise in Anschlußrohren 15 vorgesehene Ventile die Menge der austretenden heißen oder kalten Luft individuell zu steuern, um so beispielsweise bei entlang der Klebe- oder Verbindungslinie 5 sich ändernden Bauteilen 1 und 2, z.B. bei sich entlang der Klebe- oder Verbindungslinie ändernder Dicke dieser Bauteile dennoch eine möglichst gleichbleibende Temperatur für das Aushärten des Klebstoffes 6 zu erreichen.

Durch die genaue Steuerung der Temperatur ist es insbesondere auch möglich, Werkstücke aus Duroplasten zuverlässig zu verarbeiten, also Werkstücke, die äußerst sensibel auf eine Überschreitung einer noch zulässigen Temperatur reagieren und bei denen bereits bei einer Temperaturüberschreitung von 10° Celsius Beschädigungen auftreten können.

Ein weiterer Vorteil besteht darin, daß das für die Schlauchstücke 9 verwendete Kunststoffmaterial praktisch keine Wärmespeicherkapazität aufweist, also schnelle Temperaturänderungen sowie ein optimales Regelverhalten für die Temperaturregelung möglich sind, und darüber hinaus das Kunststoffmaterial auch wärmedämmend wirkt, so daß Wärmeverluste an das Werkzeug bzw. an die Werkzeugteile 3 und 4 gering gehalten werden können.

Die Figur 6 zeigt in einer Darstellung ähnlich Figur 1 als weitere mögliche Ausführungsform ein Klebewerkzeug, bei dem in den Werkzeugteilen 3 und 4 bzw. in den dortigen Ausnehmungen 7 anstelle der Schlauchstücke 9 rinnenartige Formteile 25 aus einem geeigneten wärmeisolierenden Material, beispielsweise aus Kunststoff, eingesetzt sind, die mit ihrer offenen Seite der jeweiligen Werkzeugfläche 3' bzw. 4' zugewandt sind. An der Werkzeugfläche 3' bzw. 4' sind diese Formteile 25 durch eine flexible Membran 26 verschlossen, die die Luftaustrittsöffnungen 11 aufweist und die dicht mit dem Rand des Formteils 25 verbunden ist. Jedes Formteil 25 bildet mit der zugehörigen Membran 26 einen geschlossenen Kanal 27, der wiederum über das Kupplungsstück 12 mit seinem individuellen Erhitzer 14 zu einem Heiz- und Kühlmodul verbunden ist. Es versteht sich, daß entlang der Verbindungs- oder Klebelinie 5 eine Vielzahl von Formteilen 25 mit zugehörigen Membranen 26 aufeinander folgend und aneinander anschließend vorgesehen ist, wobei die von den einzelnen Formteilen 25 und den zugehörigen Membranen gebildeten Kanäle 27 nicht miteinander in Verbindung stehen.

Im Verwendungsfall werden nach dem Schließen der Werkzeugteile 3 und 4 die einzelnen Kanäle 27 über die eingeschalteten Erhitzer 14 mit heißer Druckluft beaufschlagt, die die Membrane 26 gegen die Bauteile 1 und 2 andrückt und gleichzeitig aus den Öffnungen 14 austritt und hierbei die Bauteile 1 und 2 und damit den Klebstoff 6 in der erforderlichen Weise erhitzt. Nach einer bestimmten Zeit erfolgt dann das Abschalten der Erhitzer 14, so daß dann kühlere Luft zum Abkühlen der Klebelinie 5 aus den Öffnungen 11 wiederum in unmittelbarer Nähe der Bauteile 1 und 2 austritt.

Die Membrane 26 ist so ausgebildet, daß sie im drucklosen Zustand von der Ebene der zugehörigen Werkzeugfläche 3' bzw. 4' beabstandet ist und erst bei einem Druck im Kanal 27 in der Ebene der Werkzeugfläche 3' bzw. 4' gegen das betreffende Bauteil 1 bzw. 2 anliegt.

Die Erfindung wurde voranstehend an Ausführungsbeispielen beschrieben. Es versteht sich, daß zahlreiche Änderungen sowie Abwandlungen möglich sind, ohne daß dadurch der der durch die vorliegenden Patentansprüchen definierte Erfindung zugrundeliegende Erfindungsgedanke verlassen wird. Vorstehend wurde davon ausgegangen, daß das Erhitzen und Abkühlen des Klebstoffes 6 mit erhitzter bzw. nicht erhitzter Luft folgt. Selbstverständlich ist es auch möglich, hierfür ein entsprechendes Gas oder Gasgemisch oder ein Luft- Gas-Gemisch zu verwenden.

## Patentansprüche

1. Vorrichtung zum Verbinden wenigstens zweier Bauteile (1, 2) durch Verkleben an einander benachbarten Flächen entlang eines Klebebereichs (5) mittels eines unter Einwirkung von Wärmeenergie aushärtbarbaren Klebstoffes (6), mit zwei Werkzeugteilen (3, 4) zwischen denen die Bauteile (1, 2) mit dem Klebstoffauftrag für das Verbinden auf Werkzeugflächen (3', 4') angeordnet werden können sowie mit Mitteln (10) zum Erhitzen der Bauteile (1, 2) zumindest entlang des Klebebereichs (5) unter Verwendung von einem erhitzten gasförmigen Strömungsmedium, **dadurch gekennzeichnet, daß** die Mittel zum Erhitzen der Bauteile (1, 2) von mehreren entlang des Klebebereichs (5) aufeinander folgenden Kammern oder Kanälen (9', 27) gebildet sind, die zumindest an der jeweiligen Werkzeugfläche (3, 4) von einem membran- oder balgartigen Wandabschnitt (9, 26) begrenzt sind, und daß jeder Kanal (9', 27) mit wenigstens einem eigenen Erhitzer (14) zum Erhitzen des gasförmigen Strömungsmediums versehen ist.

2. Vorrichtung nach Anspruch 1, **dadurch gekennzeichnet, daß** das gasförmige Strömungsmedium Luft und/oder ein Gas oder ein Gasgemisch ist.

3. Vorrichtung nach Anspruch 1 oder 2, **dadurch gekennzeichnet, daß** der jeweilige Kanal (9') von dem Innenraum eines Balgs oder eines Schlauches (9) gebildet ist.

4. Vorrichtung nach einem der vorhergehenden Ansprüche, **dadurch gekennzeichnet, daß** die jeweilige Kammer (27) von einem rinnenartigen Element oder Formteil (25) gebildet ist, welches beidendig verschlossen ist und an seiner zu der Werkzeugfläche (3', 4') hin offenen Seite durch die Membrane (26) verschlossen ist.

5. Vorrichtung nach einem der vorhergehenden Ansprüche, **dadurch gekennzeichnet, daß** der membranartige Wandabschnitt, insbesondere auch der Schlauch oder Balg sowie die den rinnenartigen Abschnitt (25) abschließende Membrane (26) aus einem hitzebeständigen Kunststoff besteht.

6. Vorrichtung nach einem der vorhergehenden Ansprüche, **dadurch gekennzeichnet, daß** in dem balg- oder membranartigen Wandabschnitt Öffnungen (11) für den Austritt des gasförmigen Strömungsmediums vorgesehen sind.

7. Vorrichtung nach einem der vorhergehenden Ansprüche, **dadurch gekennzeichnet, daß** die Heizeinrichtungen (14) derart steuerbar sind, daß der Klebebereich (5) nach der Hitzebehandlung unter Verwendung des nicht erhitzten gasförmigen Strömungsmedium abkühlbar ist.

8. Vorrichtung nach einem der vorhergehenden Ansprüche, **dadurch gekennzeichnet, daß** der jeweilige Erhitzer in unmittelbarer Nähe des zugehörigen, am Klebebereich (5) vorgesehenen Kanals (9', 27) vorgesehen ist.

9. Vorrichtung nach einem der vorhergehenden Ansprüche, **dadurch gekennzeichnet, daß** die Erhitzer (14) einen Heizkörper oder eine Heizpatrone (17) mit einer Vielzahl von Strömungswegen (18) für das gasförmige Strömungsmedium aufweisen und daß in jedem Strömungsweg eine elektrische Heizspirale (19) vorgesehen ist.

10. Vorrichtung nach einem der vorhergehenden Ansprüche, **dadurch gekennzeichnet, daß** an jedem Modul (10) ein Temperatursensor (24) vorgesehen ist und/oder daß die Heizmodule bzw. deren Erhitzer (14) individuell steuerbar sind.

## Claims

1. Arrangement for joining at least two components (1, 2) by gluing together on surfaces that are adjacent to one another along an adhesive area (5) by means of an adhesive (6) that can be hardened under the action of thermal energy, with two tool parts (3, 4) between which the components (1, 2) with the adhesive coating can be arranged on tool surfaces (3', 4') for the purpose of joining, as well as with means (10) for heating up the components (1, 2) at least along the adhesive area (5), using a heated, gaseous flow medium,
**characterised in that**
the means for heating up the components (1, 2) are formed by several chambers or channels (9', 27) which follow on from one another along the adhesive area (5), and which at least at the respective tool surface (3, 4) are limited by a membrane-like or bellows-like wall section (9, 26), and that each channel (9', 27) is equipped with at least one heater (14) of its own, for heating up the gaseous flow medium.

2. Arrangement in accordance with claim 1, **characterised in that** the gaseous flow medium is air and/or a gas or a gas mixture.

3. Arrangement in accordance with claim 1 or 2, **characterised in that** the respective channel (9') is formed by the interior of a bellows or a hose (9).

4. Arrangement in accordance with one of the preceding claims, **characterised in that** the respective chamber (27) is formed by a conduit-like element or moulded part (25) which is closed off at both ends, and at the side that is open to the tool surface (3', 4') it is closed off by the membrane (26).

5. Arrangement in accordance with one of the preceding claims, **characterised in that** the membrane-like wall section, in particular also the hose or bellows as well as the membrane (26) that closes off the conduit-like section (25), comprises a heat-resistant synthetic material.

6. Arrangement in accordance with one of the preceding claims, **characterised in that** openings (11) to let out the gaseous flow medium provided in the bellows-like or membrane-like wall section.

7. Arrangement in accordance with one of the preceding claims, **characterised in that** the heating devices (14) can be controlled such that after the heat treatment, the adhesive area (5) can be cooled off using the unheated gaseous flow medium.

8. Arrangement in accordance with one of the preceding claims, **characterised in that** the respective heater is provided in the immediate vicinity of the corresponding channel (9', 27) provided on the adhesive area (5).

9. Arrangement in accordance with one of the preceding claims, **characterised in that** the heaters (14) have a heating element or a heating cartridge (17) with numerous flow paths (18) for the gaseous flow medium, and that an electrical heating coil (19)is provided in each flow path.

10. Arrangement in accordance with one of the preceding claims, **characterised in that** a temperature sensor (24) is provided on each module (10), and/or that the heating modules or their heaters (14) can be controlled individually.

## Revendications

1. Dispositif pour assembler au moins deux éléments de construction (1, 2) en collant l'une contre l'autre des surfaces voisines le long d'une zone de collage (5) au moyen d'une colle (6) durcissable sous l'action de l'énergie calorifique, comprenant deux parties d'outil (3, 4) entre lesquelles les éléments de construction (1, 2) peuvent être disposés sur des surfaces d'outil (3', 4') avec l'application de colle pour le collage ainsi que des moyens (10) pour chauffer les éléments de construction (1, 2) au moins le long de la zone de collage (5) en utilisant un milieu gazeux chauffé qui s'écoule, **caractérisé en ce que** les moyens pour chauffer les éléments de construction (1, 2) sont formés de plusieurs chambres ou canaux se suivant les uns les autres le long de la zone de collage (5) qui sont limités au moins sur la surface d'outil (3, 4) concernée par une section de paroi de type membrane ou soufflet (9, 26) et **en ce que** chaque canal (9', 27) est pourvu d'au moins un chauffage (14) propre pour chauffer le milieu gazeux qui s'écoule.

2. Dispositif selon la revendication 1, **caractérisé en ce que** le milieu gazeux qui s'écoule est de l'air et/ou un gaz ou un mélange de gaz.

3. Dispositif selon la revendication 1 ou 2, **caractérisé en ce que** le canal (9') concerné est formé par l'espace intérieur d'un soufflet ou d'un tuyau flexible (9).

4. Dispositif selon une des revendications précédentes, **caractérisé en ce que** la chambre concernée (27) est formée par un élément ou préformé (25) de type chenal qui est fermé aux deux extrémités et qui est fermé sur son côté ouvert en direction de la surface d'outil (3', 4') par la membrane (26).

5. Dispositif selon une des revendications précédentes, **caractérisé en ce que** la section de paroi de type membrane est constituée d'une matière synthétique résistant à la chaleur, de même que notamment le tuyau flexible ou soufflet ainsi que la membrane (26) fermant la section de type chenal (25).

6. Dispositif selon une des revendications précédentes, **caractérisé en ce que** des ouvertures (11) sont prévues pour la sortie du milieu gazeux qui s'écoule dans la section de paroi de type soufflet ou membrane.

7. Dispositif selon une des revendications précédentes, **caractérisé en ce que** les dispositifs de chauffage (14) peuvent être pilotés de telle manière que la zone de collage (5) puisse être refroidie, après le traitement à la chaleur, en utilisant le milieu gazeux non chauffé qui s'écoule.

8. Dispositif selon une des revendications précédentes, **caractérisé en ce que** le dispositif de chauffage concerné est prévu à proximité immédiate du canal (9', 27) y afférent, prévu dans la zone de collage (5).

9. Dispositif selon une des revendications précédentes, **caractérisé en ce que** le dispositif de chauffage (14) présente un corps de chauffe ou une cartouche chauffante (17) avec une pluralité de voies d'écoulement (18) pour le milieu gazeux qui s'écoule et **en ce qu'**une spirale de chauffage électrique (19) est prévue dans chaque voie d'écoulement.

10. Dispositif selon une des revendications précédentes, **caractérisé en ce qu'**un capteur de température (24) est prévu sur chaque module (10) et / ou **en ce que** les modules de chauffage ou leurs dispositifs de chauffe (14) peuvent être commandés individuellement.
